# EUROPÄISCHE PATENTSCHRIFT

(11) **EP 1 879 668 B1**
(45) Veröffentlichungstag und Bekanntmachung des Hinweises auf die Patenterteilung: **11.08.2010**
(21) Anmeldenummer: 06725569.5
(22) Anmeldetag: 05.04.2006
(51) Int. Cl.: A62C 4/02, F16K 17/30, F16K 17/04

(54) **EXPLOSIONSSCHUTZVENTIL**
EXPLOSION PROTECTION VALVE
SOUPAPE ANTIDEFLAGRANTE

(30) Priorität: 09.05.2005 CH 815052005
(43) Veröffentlichungstag der Anmeldung: 23.01.2008
(73) Patentinhaber: Rico-Sicherheitstechnik AG, 9100 Herisau (CH)
(72) Erfinder: ZELLWEGER, Jürg, CH-9104 Waldstatt (CH)
(74) Vertreter: Wenger, René
(86) Internationale Anmeldenummer: PCT/EP2006/061339
(87) Internationale Veröffentlichungsnummer: WO 2006/120091

(56) Entgegenhaltungen:
- WO-A-2004/048828
- CH-A- 694 303
- FR-A- 1 302 543
- GB-A- 672 340

## Beschreibung

Die Erfindung betrifft ein Explosionsschutzventil gemäss dem Oberbegriff von Anspruch 1. Derartige Ventile dienen dazu, die Fortpflanzung einer Druck- oder Sogwelle in einer Rohrleitung zu verhindern. Die Ventile werden beispielsweise bei explosionsgefährdeten Anlagen in Förderleitungen, insbesondere auch in pneumatische Förderleitungen eingebaut. Explosionsschutzventile können aber beispielsweise auch als Druckwellensicherung für die Zu- und Abluftöffnungen von Schutzräumen oder militärischen Bauten eingesetzt werden. Solche Ventile weisen in der Regel einen Schliesskörper auf, welcher bei normalem Betriebsdruck in einer neutralen Offenstellung gehalten wird, in welcher er von einem Gas- oder Flüssigkeitsstrom umströmt wird. Dies erfolgt mit Hilfe von Federn. Vielfach wirken solche Ventile zweiseitig, d. h. sie schliessen die Rohrleitung ab, gleichgültig auf welcher Seite des Ventils die Druck- oder Sogwelle auftritt.

Ein gattungsmässig vergleichbares Explosionsschutzventil beschreibt beispielsweise die DE-A-28 01 950. Das Ventil weist ein symmetrisch ausgebildetes Gehäuse auf, in welchem ein Schliesskörper gehalten ist. Der Schliesskörper ist an einer Führungsstange geführt und gegen die Kraft einer Federanordnung aus einer vordefinierten Offenstellung bei einer Druck- oder Sogwelle in zwei Bewegungsrichtungen in eine dichtende Schliessstellung verschiebbar. Das Ventil weist dazu zwei Federelemente auf, wobei jeweils ein Federelement seitlich an der Führungsstange angeordnet ist. Schon bei geringen Druckschwankungen beginnt sich der Schliesskörper zu verschieben, wodurch der Ventilquerschnitt bzw. der Spalt zwischen Schliesskörper und Schliesskörperdichtung verkleinert wird und so die Druckdifferenz im Ventil steigt. Bewegt sich der Schliesskörper Richtung Schliessstellung, so steigt die Kraft der Zentrierfeder linear, der Druck durch die Luftströmung auf den Schliesskörper steigt hingegen exponential an. Sobald die Kraft durch die Luftströmung grösser als die Kraft der Zentrierfeder ist, schliesst das Ventil plötzlich. In der Praxis hat sich gezeigt, dass eine derartige Ventilcharakteristik ungünstig sein kann.

Die CH-A5-694 303 beschreibt ein Explosionsschutzventil, bei welchem nach dem Überwinden einer Vorspannkraft ein mittig angeordnetes Federelement bei der Verschiebung des Schliesskörpers zusammengepresst, wird. Die Federanordnung kann alternativ auch aus zwei an den Seiten der Führungsstange angeordneten Federelementen bestehen. Nach Überschreiten der Vorspannkraft weist auch dieses Ventil ein je nach Einsatzzweck ungünstiges Schliessverhalten auf.

Ein weiteres Explosionsschutzventil wird in WO 2004/048828 offenbart.

Es ist deshalb eine Aufgabe der vorliegenden Erfindung, die Nachteile des Bekannten zu vermeiden, insbesondere ein Explosionsschutzventil der eingangs genannten Art zu schaffen, welches sich durch ein besseres Schliessverhalten auszeichnet. Insbesondere soll das Ventilverhalten im Bereich der plötzlich auftretenden Schliessbewegung optimiert werden. Weiter soll das Explosionsschutzventil auf einfache Art und Weise herstellbar sein. Diese Aufgabe wird erfindungsgemäss mit einem Explosionsschutzventil gelöst, das die Merkmale in Anspruch 1 aufweist.

Durch die zweistufige Federanordnung wird ein optimiertes Schliessverhalten des Ventils erreicht. Der Einsatz des zweiten Federelements verhindert ein zu frühes plötzliches Schliessen des Ventils. Die Federanordnung ist dabei derart ausgestaltet, dass innerhalb des vorbestimmten Federwegs das zweite Federelement nicht zusammengedrückt oder anderweitig beaufschlagt wird. Bei einer Explosion kann der Schliesskörper zum Zeitpunkt des Überschreitens des vorbestimmten Federwegs eine gewisse Geschwindigkeit aufweisen. Durch die kinetische Energie des Schliesskörpers wird nun das zweite Federelement zusammengedrückt. Je nach gewählter Stärke des zweiten Federelements kann das Ventil früher oder später geschlossen werden. Das erste Federelement kann dabei derart ausgebildet sein, dass beispielsweise nach dem Abschalten der Luftströmung der Schliesskörper wieder seine vordefinierte Offenstellung einnimmt. Mit Hilfe einer Verriegelungsvorrichtung kann der Schliesskörper in der Schliessstellung verriegelt werden. Derartige Verriegelungsvorrichtungen sind beispielsweise aus der CH-A5-694 303 bekannt. Selbstverständlich ist es denkbar, ein Explosionsschützventil mit einer dreistufigen oder mehrstufigen Federcharakteristik im Sinne der vorliegenden Erfindung auszurüsten. Alternativ ist es aber auch vorstellbar, eine Federanordnung mit einer stufenlosen Charakteristik auszurüsten. In diesem Fall könnte man beispielsweise eine konische Feder vorsehen.

In einer ersten Ausführungsform kann das Explosionsschutzventil wenigstens ein erstes Mitnehmerelement und wenigstens ein zweites Mitnehmerelement zum Beaufschlagen des ersten bzw. zweiten Federelements aufweisen. Der Schliesskörper kann dabei derart an der Führungsstange verschiebbar angeordnet sein, dass innerhalb des vorbestimmten Federwegs nur das erste Federelement über das erste Mitnehmerelement beaufschlagbar ist. Sobald der vorbestimmte Federweg überschritten ist, kann zusätzlich das zweite Federelement über das zweite Mitnehmerelement beaufschlagbar sein. Mit Hilfe von Mitnehmerelementen können so auf einfache Art und Weise Kräfte auf die Federelemente übertragen werden.

Das erste Mitnehmerelement und das zweite Mitnehmerelement können an der Innenseite eines die Führungsstange umgebenden Trägerrohrs für den Schliesskörper angeordnet sein. Mitnehmerelemente können beispielsweise als Sicherungsringe ausgebildet sein oder Sicherungsringe aufweisen. Das genannte Trägerrohr kann verschiebbar auf Gleitlagern auf der Führungsstange gelagert sein. Die Federelemente sind somit vorteilhaft im Ringspalt zwischen der Aussenseite der Führungsstange und der Innenseite des Trägerrohrs als Zentrierfedern ausgestaltet und so vom Fördermedium abgeschirmt.

Das Explosionsschutzventil kann als zweiseitig wirkendes Ventil ausgestaltet sein. Dazu kann es einen in zwei Bewegungsrichtungen verschiebbaren Schliesskörper aufweisen, wobei zum Verschieben des Schliesskörpers in zwei Bewegungsrichtungen ein erstes Mitnehmerelement und ein zweites Mitnehmerelement vorgesehen sein können. Dabei kann bezogen auf eine der Bewegungsrichtungen ein dieser Bewegungsrichtung zugeordnetes erstes Federelement über das erste Mitnehmerelement und ein zweites Federelement über das zweite Mitnehmerelement beaufschlagbar sein. In Gegenrichtung zur genannten Bewegungsrichtung kann ein der Gegenrichtung zugeordnetes erstes Federelement über das (genannte) zweite Mitnehmerelement beaufschlagbar sein. Die Mitnehmerelemente können also zum Beaufschlagen der Federelemente, insbesondere zum Zusammenpressen der Federelemente in beide Richtungen benutzt werden.

Besonders vorteilhaft ist es, wenn die Federanordnung ein zweites Federelement aufweist, das in jede der beiden Bewegungsrichtungen mit dem Schliesskörper in Wirkverbindung steht. Das zweite Federelement kann dabei in eine Bewegungsrichtung über das erste Mitnehmerelement und in Gegenrichtung über das zweite Mitnehmerelement beaufschlagbar sein. Eine zweistufige Federanordnung kann so mit lediglich drei Federn auskommen. Eine derartige Federanordnung mit drei Federn kann beispielsweise wie folgt ausgestaltet sein: im Bereich jeder Seite der Führungsstange kann jeweils ein erstes Federelement angeordnet sein. Zwischen den beiden ersten Federelementen kann ein zweites Federelement angeordnet sein, wobei dieses bevorzugt auf der Führungsstange etwa mittig angeordnet sein kann.

Das zweiseitig wirkende zweite Federelement kann zwischen zwei Begrenzungsmitteln gehalten sein. Besonders vorteilhaft ist es, wenn die Begrenzungsmittel für das zweite Federelement begrenzt verschiebbar auf der Führungsstange gelagert sind.

Diese Begrenzungsmittel können jeweils eine auf der Führungsstange begrenzt verschiebbar gelagerte Büchse aufweisen. Die Büchse kann so einen Anschlag für das erste Mitnehmerelement bilden. Wird der vorbestimmte Federweg überschritten, so stösst das entsprechende Mitnehmerelement an die Büchse an, wodurch das zweite Federelement zusammendrückbar sein kann.

Für die begrenzte Verschiebung der Begrenzungsmittel, insbesondere für die erwähnte Büchse, kann auf der Führungsstange wenigstens eine in Bewegungsrichtung verlaufende Führungsnut angeordnet sein, in die jeweils mit der Büchse verbundene Stifte eingreifen.

Zum Verschieben des Schliesskörpers in zwei Bewegungsrichtungen können aber auch zwei erste Mitnehmerelemente mit zugehörigen ersten Federelementen und zwei zweite Mitnehmerelemente mit zugehörigen zweiten Federelementen vorgesehen sein. Dabei kann das jeweilige erste Federelement über dessen erstes Mitnehmerelement bzw. das jeweilige zweite Federelement über dessen zweites Federelement in einer ihm zugeordneten Bewegungsrichtung beaufschlagbar sein. Eine derartige Federanordnung kann somit aus vier Federn bestehen. Dabei können jeweils zwei Federelemente als Federpaar mit dem Schliesskörper nur in je eine Bewegungsrichtung zusammenwirken.

Die Federanordnung kann zwei Federpaare aufweisen, wobei für jede Bewegungsrichtung je ein Federpaar mit einem ersten Federelement und einem zweiten Federelement auf einer Seite der Führungsstange angeordnet ist.

Vorteilhaft kann es sein, wenn wenigstens das zweite Federelement mit Hilfe von Begrenzungsmitteln in vorgespannter Stellung gehalten ist. Durch das Vorspannen des zweiten Federelements kann eine Vorspannkraft erzielt werden, welche nach Überschreiten des vorbestimmten Federwegs zuerst überwunden werden muss, bevor überhaupt eine weitere Verschiebung in Richtung gegen die Schliessstellung stattfinden kann. Selbstverständlich ist auch denkbar, je nach Einsatzzweck auch die ersten Federelemente zwischen Begrenzungsmitteln in vorgespannter Stellung zu halten.

Die Federelemente der Federanordnung können als Druckfedern, insbesondere als Schraubendruckfedern ausgestaltet sein. Die Federn können beispielsweise aus Metall, insbesondere aus Stahl, bestehen. Je nach Anwendungsbereich könnten Federn auch aus Gummi oder einem vergleichbaren Material bestehen. Vorstellbar sind sogar hydraulische Federn.

Die Federstreifigkeit des ersten Federelements kann gleich, grösser oder kleiner als die Federstreifigkeit des zweiten Federelements sein.

Weitere Einzelmerkmale und Vorteile der Erfindung ergeben sich aus der nachfolgenden Beschreibung der Ausführungsbeispiele und aus den Zeichnungen. Es zeigen:
- Fig. 1: einen Querschnitt durch ein Explosionsschutzventil mit einem Schliesskörper in der Offenstellung,
- Fig. 2: das Detail A gemäss Fig. 1,
- Fig. 3: das Detail B gemäss Fig. 1,
- Fig. 4a: einen vergrösserten Ausschnitt des Querschnitts eines Explosionsschutzventils gemäss Fig. 1 mit einem Schliesskörper in Offenstellung,
- Fig. 4b: das Explosionsschutzventil gemäss Fig. 4a mit einem um einen Federweg a verschobenen Schliesskörper,
- Fig. 4c: das Explosionsschutzventil gemäss Fig. 4a mit einem um eine weitere Strecke verschobenen Schliesskörper,
- Fig. 5: ein Kraft-Weg-Diagramm für ein Explosionsschutzventil gemäss den Fig. 4a - 4c,
- Fig. 6: einen Querschnitt durch ein alternatives Explosions- schutzventil mit einem Schliesskörper in Offenstellung,
- Fig. 7a: einen Ausschnitt des Explosionsschutzventils gemäss Fig. 6 mit einem Schliesskörper in Offenstellung,
- Fig. 7b: das Explosionsschutzventil gemäss Fig. 7a mit einem um einen Federweg a verschobenen Schliesskörper,
- Fig. 7c: das Explosionsschutzventil gemäss Fig. 7a mit einem um eine weitere Strecke verschobenen Schliesskörper,
- Fig. 8a bis 8c: vergrösserte Darstellungen der Querschnittsdarstellung gemäss den Fig. 7a - 7c,
- Fig. 9a: einen Ausschnitt eines weiteren Explosionsschutzventils in Offenstellung im Querschnitt,
- Fig. 9b: das Explosionsschutzventil gemäss Fig. 9a mit einem um einen Federweg a verschobenen Schliesskörper,
- Fig. 9c: das Explosionsschutzventil gemäss Fig. 9a mit einem um eine weitere Strecke b verschobenen Schliesskörper und
- Fig. 9d: ein Kraft-Weg-Diagramm für ein Explosionsschutzventil gemäss Fig. 9a - 9c.

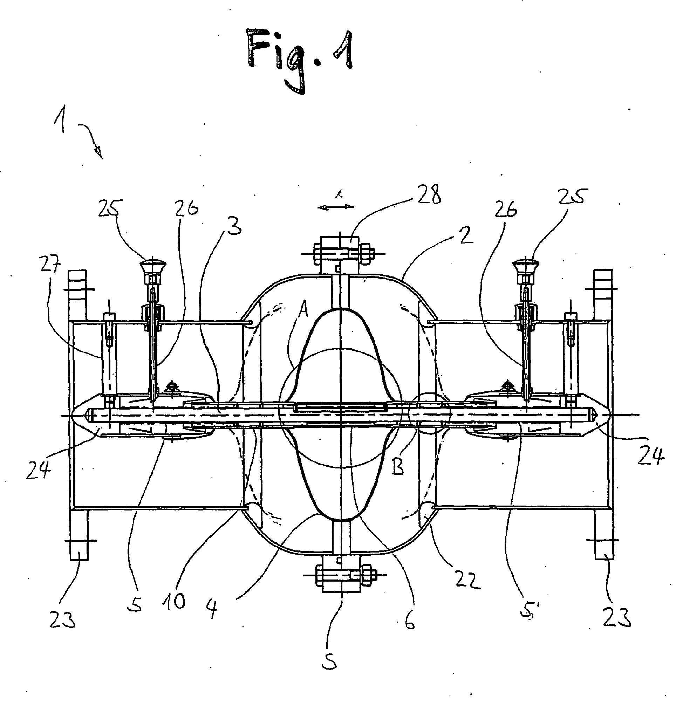

Wie in Fig. 1 dargestellt, besteht ein insgesamt mit 1 bezeichnetes Explosionsschutzventil im Wesentlichen aus einem Gehäuse 2 und einem in diesem angeordneten Schliesskörper 4, der auf einer Führungsstange 3 verschiebbar gelagert ist. Das Gehäuse 2 besteht aus zwei etwa spiegelsymmetrischen Gehäusehälften, welche über eine Flanschverbindung 28 lösbar miteinander verbunden sind. Das Ventil kann mit Hilfe der Flansche 23 in eine Rohrleitung integriert werden.

Der Schliesskörper 4 ist als rotationssymmetrischer, im Querschnitt etwa elliptischer Hohlkörper ausgebildet. In der Schliessstellung würde der Schliesskörper 4 an den ringförmigen Dichtungselementen 22 anliegen (die beiden Schliessstellungen sind in Fig. 1 durch eine gestrichelte Linie angedeutet).

Die Führungsstange 3 ist an beiden Enden in einem Haltestück 24 fixiert. Der Schliesskörper 4 ist nicht direkt an der Führungsstange 3 gelagert, sondern mittelbar über ein Trägerrohr 10, das sich auf beiden Seiten über den Schliesskörper 4 hinaus erstreckt. Weiter sind Verriegelungsvorrichtungen 25 mit Riegelstangen 26 zum Festhalten des Schliesskörpers in der Schliessstellung vorgesehen. Ein mechanisch verriegeltes Ventil ist dabei derart ausgebildet, dass es nur manuell geöffnet bzw. entriegelt werden kann. Eine derartige Verriegelungsvorrichtung ist beispielsweise aus der CH-A5-694 303 bekannt.

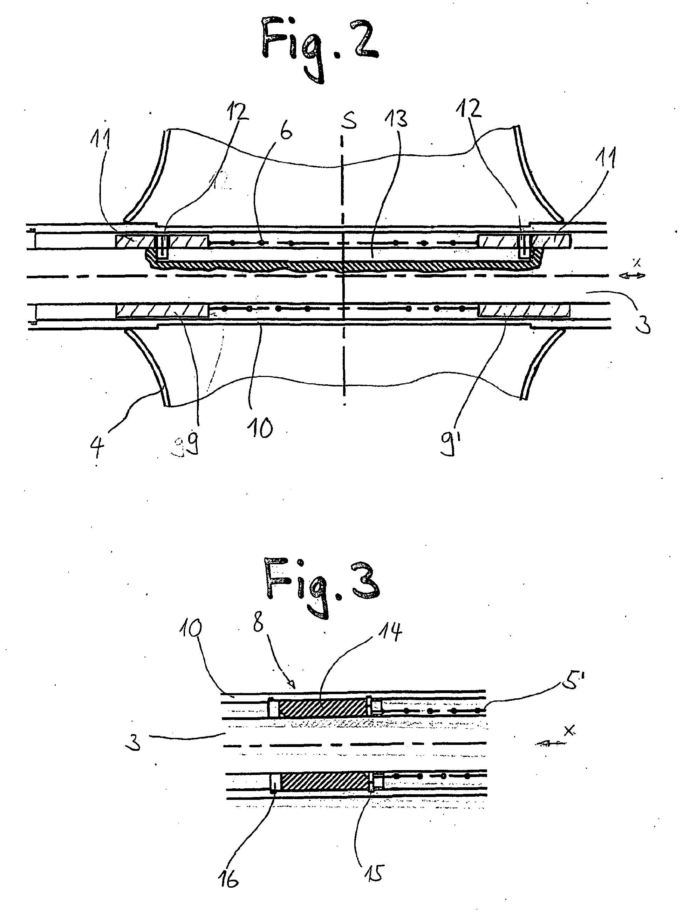

Zum Halten der Offenstellung ist im Spaltraum zwischen Führungsstange 3 und Trägerrohr 10 an der Führungsstange eine mit dem Schliesskörper 4 in Wirkverbindung stehende Federanordnung vorgesehen. Die Federanordnung gemäss Fig. 1 weist drei Federelemente auf: zwei erste Federelemente 5 und 5' sowie ein zweites Federelement 6. Die an den Seiten der Führungsstange angeordneten ersten Federelemente sind jeweils bezogen auf eine Bewegungsrichtung zusammenpressbar. Das in der Mitte angeordnete zweite Federelement 6 ist dagegen in beide Bewegungsrichtungen (siehe Pfeil) zusammenpressbar und hat damit eine Doppelfunktion. Die Federanordnung ist dabei derart ausgestaltet, dass bei einer Verschiebung des Schliesskörpers in die Schliessstellung das zweite Federelement 6 erst nach einem vorbestimmten Federweg zusammenpressbar ist. Selbstverständlich ist es denkbar, dass die Federelemente auch auf andere Weise beaufschlagt werden. Beispielsweise könnten die Federelemente (als Zugfedern) auseinander gezogen werden. Der Aufbau und die genaue Wirkungsweise der Federanordnung des Ventils 1 gemäss Fig. 1 soll nachfolgend anhand der Figuren 2 bis 5 erläutert werden.

Wie Fig. 2 zeigt, ist die mittig angeordnete Feder, d. h. das zweite Federelement 6, zwischen zwei Begrenzungsmitteln 9, 9' angeordnet. Die Begrenzungsmittel weisen auf der Führungsstange 3 gelagerte Büchsen 11 auf, die begrenzt verschiebbar auf der Führungsstange 3 gelagert sind. Dazu ist eine in Bewegungsrichtung verlaufende Führungsnut 13 vorgesehen, in die jeweils Stifte 12 eingreifen, die mit der jeweiligen Büchse 11 verbunden sind. Die Stifte 12 können beispielsweise als Gewindestifte ausgebildet sein. Mit Hilfe der Begrenzungsmittel 9 und 9' kann auf einfach Art und Weise das Federelement 6 vorgespannt werden. Selbstverständlich ist jedoch eine Vorspannung nicht zwingend notwendig.

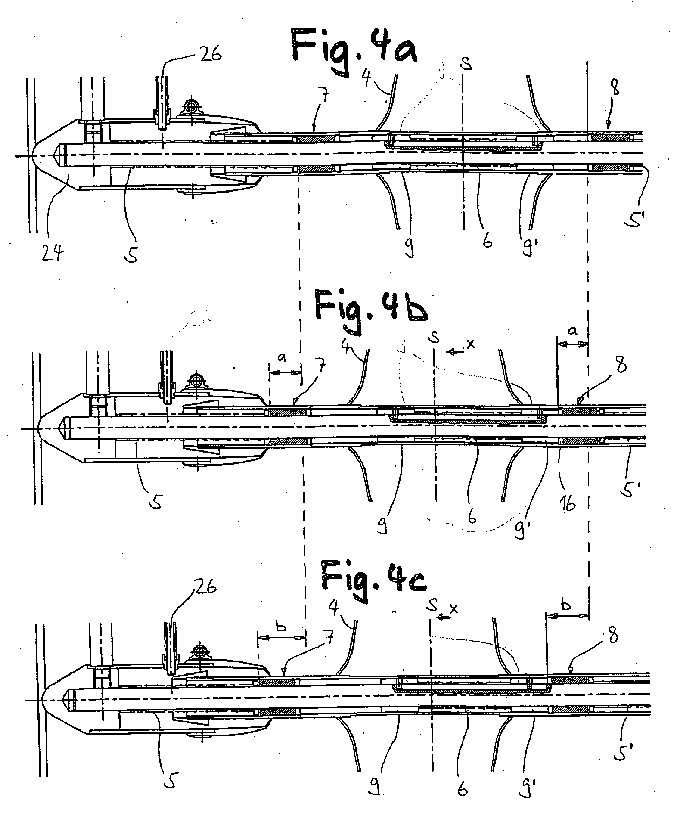

Fig. 3 zeigt ein Mitnehmerelement zum Beaufschlagen der Federelemente mit einer Federkraft. Das mit 8 bezeichnete Mitnehmerelement ist bezogen auf die Pfeilrichtung x (Bewegungsrichtung) als zweites Mitnehmerelement für das zweite Federelement 6 ausgestaltet (siehe Fig. 2 sowie nachfolgende Fig. 4a - 4c). Das Mitnehmerelement 8 weist einen am Trägerrohr 10 befestigten Sicherungsring 15 auf. Am Sicherungsring 15 schliesst ein Gleitlager 14 zum Ermöglichen der Verschiebung der Führungsstange 3 an. Zur Mitte hin ist sodann ein Distanzring 16 vorgesehen, der an eine umlaufende Schulter des Trägerrohrs 10 anstösst. Das andere Mitnehmerelement (7) ist gleichartig, jedoch spiegelverkehrt aufgebaut (vgl. Fig. 4a - 4c).

Die Figuren 4a - 4c zeigen den Schliesskörper 4 in drei verschiedenen Stellungen. In Fig. 4a befindet sich der Schliesskörper 4 in seiner neutralen Offenstellung. Bei einem Gas- oder Flüssigkeitsstrom in Pfeilrichtung x würde sich der Schliesskörper 4 in diese Richtung gegen die Schliessstellung bewegen. In diesem Fall wird zuerst das erste Federelement 5 über das Mitnehmerelement 7 zusammengedrückt. Das für die zweite Stufe vorgesehene zweite Federelement 6 bleibt innerhalb des Federwegs a bzw. innerhalb der Verschiebung des Schliesskörpers 4 um eine Strecke a unbeaufschlagt. In Fig. 4b ist der Schliesskörper 4 um eine Strecke a in x-Richtung verschoben. Wie aus Fig. 4 b hervorgeht, stösst das Mitnehmerelement 8 über den Distanzring 16 (vgl. Fig. 3) an. Bei einer weiteren Verschiebung des Schliesskörpers 4 in x-Richtung würde nun ebenfalls das zweite Federelement 6 zusammengedrückt. Eine solche Stellung ist in Fig. 4c gezeigt. Hier ist einerseits das erste Federelement 5 um den Federweg b und anderseits das zweite Federelement 6 um eine Strecke (b-a) zusammengedrückt.

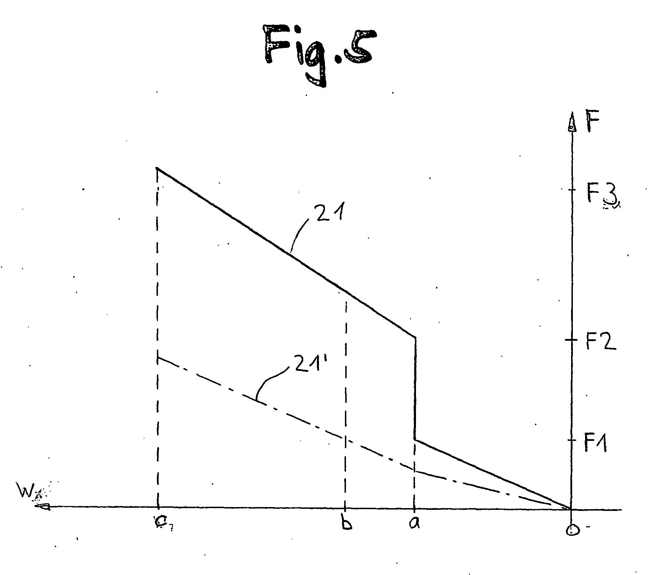

Fig. 5 zeigt ein Kraft-Weg-Diagramm für ein Explosionsventil gemäss den Figuren 4a - 4c, (Weg: w, Kraft: F). Von der Offenstellung 0 bis zum Federweg a verläuft die Kurve 21 linear ausgehend von Null (oder von einem bestimmten Wert, falls vorgespannt) bis zu einer Federkraft F1. Ab dem Federweg a wird neben dem ersten Federelement nun auch das zweite Federelement beaufschlagt. Bei Überschreiten des Federwegs bzw. der Strecke a verläuft die Kurve 21 von einer Federkraft F2 bis zur Schliessstellung (Weg c) F3 linear. Wie aus Fig. 5 hervorgeht, ist das zweite Federelement 6 vorgespannt. Bevor also ein weiterer Federweg als a zurückgelegt werden kann, muss die Vorspannkraft (F2-F1) überwunden werden. Beim Kurvenverlauf gemäss 21' wäre das zweite Federelement nicht vorgespannt.

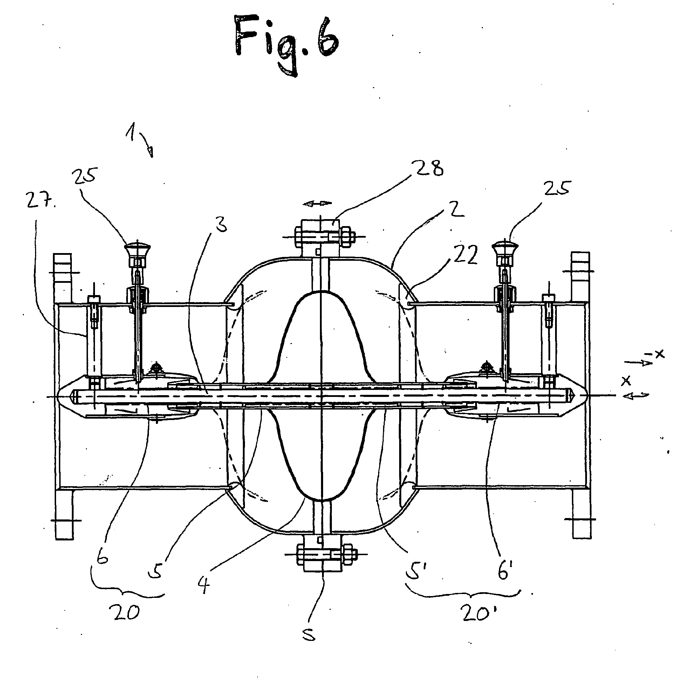

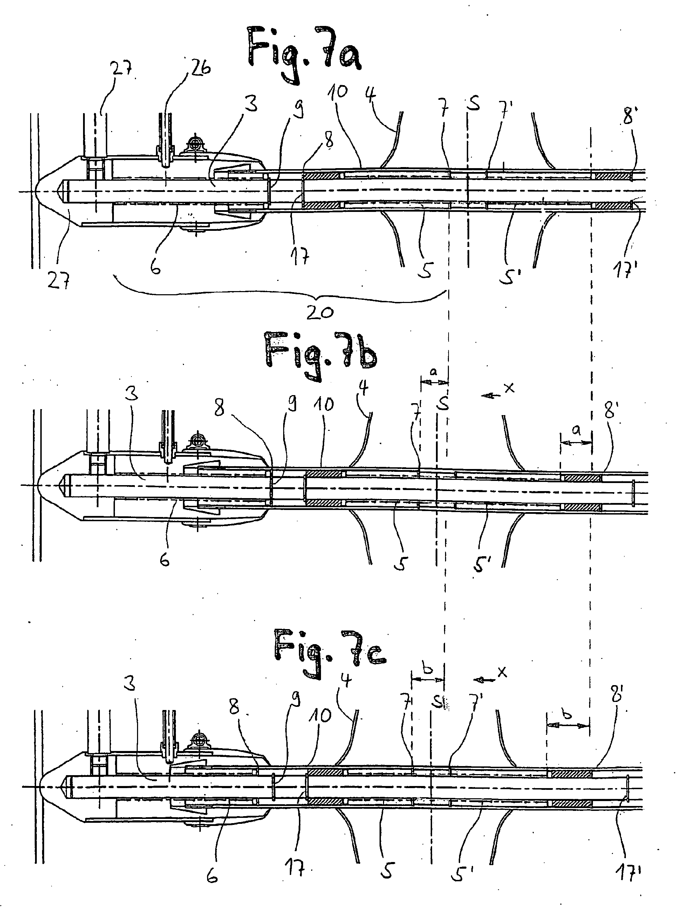

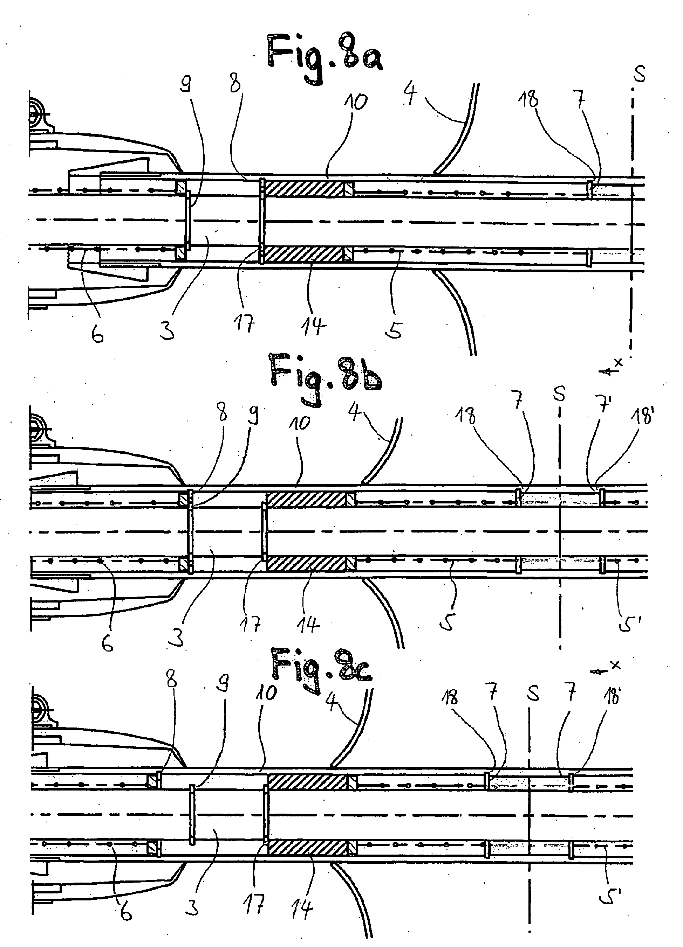

In Fig. 6 ist ein alternatives Ausführungsbeispiel eines Explosionsschutzventils dargestellt, dessen Funktionsprinzip gleich ist wie beim Ausführungsbeispiel gemäss Fig. 1. Das Explosionsschutzventil gemäss Fig. 6 weist jedoch eine andere Federanordnung auf. Zum Verschieben des Schliesskörpers 4 sind je Bewegungsrichtung jeweils zwei Federelemente vorgesehen. Für die Bewegungsrichtung x wären dies die Federelemente 6 und 5 (Federpaar 20) und in Gegenrichtung (Pfeilrichtung - x) die Federelemente 5' und 6' (Federpaar 20'). Die Federpaare 20 und 20' sind dabei bezogen auf die jeweilige Bewegungsrichtung auf einer Seite der Führungsstange 3 angeordnet (S: Symmetrieebene). Einzelheiten der Federanordnung sind aus den Fig. 7a - 7c sowie 8a - 8c ersichtlich.

Fig. 7a zeigt das Explosionsschutzventil in seiner neutralen Offenstellung. Ein Federpaar 20 enthält bezogen auf die Symmetrieebene S ein innenseitig angeordnetes erstes Federelement 5 sowie ein aussenseitig angeordnetes Federelement 6. Die Federelemente 5, 6, 5' (sowie 6') sind im hohlzylindrischen bzw. ringförmigen Spaltraum zwischen Führungsstange 3 und Trägerrohr 10 angeordnet (wie beim vorgängigen Ausführungsbeispiel). Verschiebt sich nun der Schliesskörper 4 in x-Richtung, so.wird innerhalb eines Federwegs a nur ein Federelement, das erste Federelement 5 beaufschlagt (in Gegenrichtung wäre dies das erste Federelement 5'). Über ein erstes Mitnehmerelement 7, beispielsweise in Form eines mit dem Trägerrohr 10 verbundenen Sicherungsrings, wird das erste Federelement 5 zusammengedrückt. Das zweite Federelement 6 sowie die übrigen Federelemente bleiben dabei unbeaufschlagt. Fig. 7b zeigt das Explosionsschutzventil mit einem um eine Strecke a in x-Richtung verschobenen Schliesskörper 4. In dieser Stellung ist das erste Federelement 5 um den Federweg a über das Mitnehmerelement 7 zusammengedrückt. Zugleich hat sich ebenfalls das zweite Mitnehmerelement 8 für das zweite Federelement 6 um die Strecke a in x-Richtung verschoben. Ersichtlicherweise kann nun bei einer weiteren Verschiebung in x-Richtung auch das zweite Federelement über den zweiten Mitnehmer 8 zusammengedrückt werden. Eine solche Stellung ist aus Fig. 7c erkennbar. Hier ist der Schliesskörper 4 um eine Strecke b, welche grösser als a ist, in x-Richtung verschoben. Wie Fig. 7c zeigt, ist das zweite Federelement 6 um einen Federweg (b - a) über das Mitnehmerelement 8 zusammengedrückt worden. Das erste Federelement 5 ist um den Federweg b zusammengedrückt.

Die Fig. 8a - 8c zeigen vergrösserte Ausschnitte der vorhergehenden Figuren 7a - 7c (Fig. 8a/b/c entspricht dabei Fig. 7a/b/c). Wie aus den Fig. 8a - 8c ersichtlich ist, sind die ersten Mitnehmerelemente 7 und 7' als ringförmige Elemente augestaltet. Diese Ringe sind verschiebbar auf der Führungsstange 3 gelagert und jeweils in einer Schulter 18 bzw. 18' des Trägerrohrs 10 positioniert. Auf diese Weise können die Mitnehmerelemente 7 ihre Mitnahmefunktion zur Herstellung einer Wirkverbindung zwischen Schliesskörper 4 und Federelement 5 bzw. 5' erfüllen. Selbstverständlich könnte man aber auch als erste Mitnehmerelemente 7 bzw. 7' mit dem Trägerrohr 10 fest verbundene Sicherungsringe vorsehen. Das erste Federelement 5 ist nach aussen hin durch ein Begrenzungselement 17 gesichert. Dieses Begrenzungselement 17 (bzw. 17') kann als Sicherungsring ausgestaltet sein, welcher mit der Führungsstange 3 fest verbunden ist. An das Begrenzungselement 17 schliesst ein Gleitlager 14 für die Führungsstange 3 an. Das zweite Federelement 6 ist durch das Begrenzungsmittel 9 in -x-Richtung gesichert. Somit kann das zweite Federelement 6 (sowie analog das zweite Federelement 6' für die Gegenrichtung) in vorgespannter Stellung zwischen dem Haltestück 24 und dem Begrenzungsmittel 9 in vorgespannter Stellung gehalten werden. Selbstverständlich ist es denkbar, dass auch das erste Federelement 5 (bzw. 5') vorgespannt sein kann. Wie aus den Fig. 8a - 8c ersichtlich ist, sind die Sicherungsringe für die Mitnehmerelemente 8 (bzw. 8') sowie für die Begrenzungsmittel 9 (bzw. 9' und 17 bzw. 17') derart auszugestalten, dass keine gegenseitige Behinderung möglich ist. Dies geht insbesondere aus den Fig. 8a und 8b hervor: In Offenstellung liegen der Sicherungsring für das Begrenzungselement 17 und der Sicherungsring für das zweite Mitnehmerelement 8 übereinander (Fig. 8a); nach Verschiebung um die vorbestimmte Strecke bzw. Federweg a in x-Richtung liegen die Sicherungsringe für das Begrenzungsmittel 9 und für das zweite Mitnehmerelement 8 übereinander (Fig. 8b).

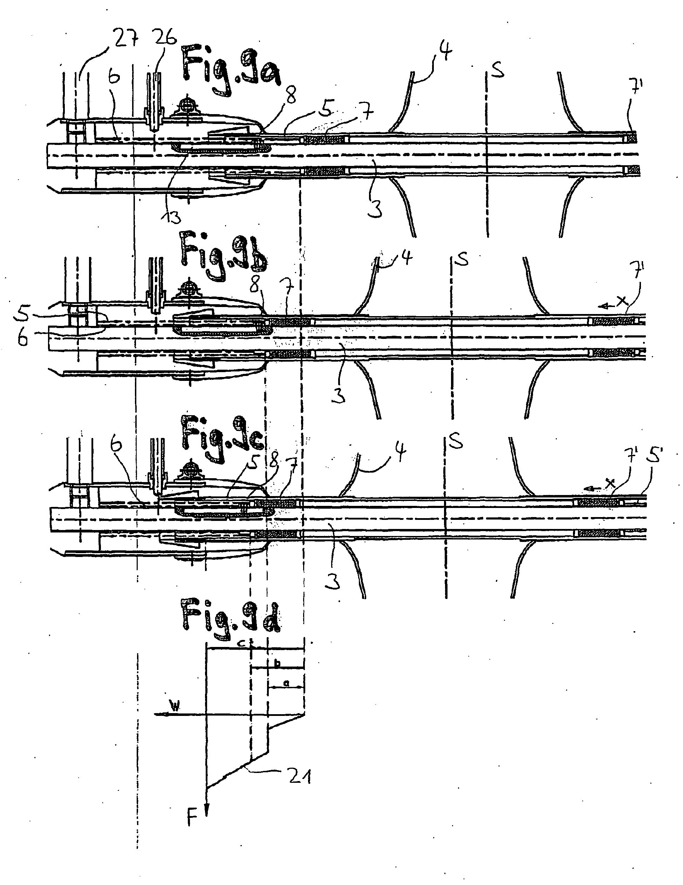

Wie die Fig. 9a - 9c zeigen, sind auch andere konstruktive Ausgestaltungen denkbar, ohne dass dabei der Erfindungsgedanke verlassen wird. Hier weist die Federanordnung des Explosionsschutzventils bezogen auf eine Bewegungsrichtung jeweils zwei Federelemente unterschiedlicher Länge auf, welche übereinander liegen. In der Offenstellung gemäss Fig. 9a ist das erste Federelement 5 um eine Strecke a (vgl. Fig. 9d) länger als das zweite Federelement 6. Die Differenz der Längen der beiden Federn entspricht dem vorbestimmten Federweg a. Wie aus dem Kraft-Weg-Diagramm gemäss Fig. 9d hervorgeht, ist das zweite Federelement vorgespannt. Dazu kann beispielsweise ein Mitnehmerelement 8 vorgesehen werden, das begrenzt bezogen auf eine Führungsnut 13 auf dem Trägerrohr 3 gelagert ist. Hierbei werden bevorzugt Schraubendruckfedern mit unterschiedlichen Durchmessern gewählt, die bezogen auf das Trägerrohr im Querschnitt konzentrisch zueinander angeordnet sind. In Fig. 9b ist das erste Federelement 5 um eine Strecke/einen Federweg a in X-Richtung verschoben worden. In dieser Stellung schlägt das erste Mitnehmerelement 7 an das zweite Mitnehmerelement 8 an. Wie Fig. 9c zeigt, kann bei einer weiteren Verschiebung in X-Richtung nun auch das zweite Federelement 6 zusammengedrückt werden.

## Patentansprüche

1. Explosionsschutzventil mit einem Gehäuse (2) und mit wenigstens einem beweglichen, innerhalb des Gehäuses (2) an einer Führungsstange (3) geführten Schliesskörper (4), der aus einer vordefinierten Offenstellung bei einer Druck- oder Sogwelle in wenigstens eine Bewegungsrichtung in eine dichtende Schliessstellung verschiebbar ist, wobei zum Halten der Offenstellung an der Führungsstange (3) eine mit dem Schliesskörper (4) in Wirkverbindung stehende Federanordnung vorgesehen ist, **dadurch gekennzeichnet, dass** die Federanordnung bezogen auf eine Bewegungsrichtung wenigstens ein erstes Federelement (5, 5') und wenigstens ein zweites Federelement (6, 6') aufweist; wobei die beiden Federelemente derart angeordnet sind, dass bei einer Verschiebung des Schliesskörpers (4) in die Schliessstellung das zweite Federelement (6, 6') erst nach einem vorbestimmten Federweg (a) des ersten Federelements (5, 5') beaufschlagbar ist.

2. Explosionsschutzventil nach Anspruch 1, **dadurch gekennzeichnet, dass** wenigstens ein erstes Mitnehmerelement (7, 7') und wenigstens ein zweites Mitnehmerelement (8, 8') zum Beaufschlagen des ersten bzw. zweiten Federelements (5 bzw. 6) vorgesehen ist, wobei der Schliesskörper (4) derart an der Führungsstange (3) verschiebbar angeordnet ist, dass innerhalb des vorbestimmten Federwegs (a) nur das erste Federelement (5) über das erste Mitnehmerelement (7, 7') und beim Überschreiten des vorbestimmten Federwegs (a) zusätzlich das zweite Federelement (6) über das zweiten Mitnehmerelement (8) beaufschlagbar ist.

3. Explosionsschutzventil nach Anspruch 1 oder 2, **dadurch gekennzeichnet, dass** das erste Mitnehmerelement (7, 7') und das zweite Mitnehmerelement (8, 8') an der Innenseite eines die Führungsstange (3) umgebenden Trägerrohrs (10) für den Schliesskörper (4) angeordnet ist.

4. Explosionsschutzventil einem der Ansprüche 1 bis 3 mit einem in zwei Bewegungsrichtungen verschiebbaren Schliesskörper (4), **dadurch gekennzeichnet, dass** zum Verschieben des Schliesskörpers (4) in zwei Bewegungsrichtungen ein erstes Mitnehmerelement (7) und ein zweites Mitnehmerelement (8) vorgesehen ist, wobei bezogen auf eine der Bewegungsrichtungen ein dieser Bewegungsrichtung zugeordnetes erstes Federelement (5) über das erste Mitnehmerelement (7), und ein der Gegenrichtung zugeordnetes erstes Federelement (5') und ein zweites Federelement (6) über das zweite Mitnehmerelement (8) beaufschlagbar ist.

5. Explosionsschutzventil nach Anspruch 4, **dadurch gekennzeichnet, dass** die Federanordnung ein zweites Federelement (6) aufweist, das in jede der beiden Bewegungsrichtungen mit dem Schliesskörper (4) in Wirkverbindung steht, wobei das zweite Federelement (6) in eine Bewegungsrichtung über das erste Mitnehmerelement (7) und in Gegenrichtung über das zweite Mitnehmerelement (8) beaufschlagbar ist.

6. Explosionsschutzventil nach Anspruch 5, **dadurch gekennzeichnet, dass** im Bereich jeder Seite der Führungsstange (3) jeweils ein erstes Federelement (5, 5') und dazwischen, insbesondere bezogen auf die Führungsstange (3) etwa mittig, das zweite Federelement (6) angeordnet ist.

7. Explosionsschutzventil nach Anspruch 5 oder 6, **dadurch gekennzeichnet, dass** das zweite Federelement (6) zwischen zwei Begrenzungsmitteln (9) gehalten ist.

8. Explosionsschutzventil nach Anspruch 7, **dadurch gekennzeichnet, dass** die Begrenzungsmittel (9) für das zweite Federelement (6) begrenzt verschiebbar auf der Führungsstange (3) gelagert sind.

9. Explosionsschutzventil nach Anspruch 7 oder 8, **dadurch gekennzeichnet, dass** die Begrenzungsmittel (9) jeweils eine Büchse 11 aufweisen.

10. Explosionsschutzventil nach einem der Ansprüche 8 oder 9, **dadurch gekennzeichnet, dass** für die begrenzte Verschiebung der Begrenzungsmittel (9) wenigstens eine in Bewegungsrichtung verlaufender Führungsnut (13) auf der Führungsstange (3) angeordnet ist, in die jeweils mit der jeweiligen Büchse (11) verbundene Stifte (12) eingreifen.

11. Explosionsschutzventil nach einem der Ansprüche 1 bis 3, **dadurch gekennzeichnet, dass** zum Verschieben des Schliesskörpers (4) in zwei Bewegungsrichtungen zwei erste Mitnehmerelemente (7, 7') mit zugehörigen ersten Federelementen (5, 5') und zwei zweite Mitnehmerelemente (8, 8') mit zugehörigen zweiten Federelementen (6, 6') vorgesehen sind, wobeidas jeweilige erste Federelement (5, 5') über dessen erstes Mitnehmerelement (7, 7') bzw. das jeweilige zweite Federelement (6, 6') über dessen zweites Mitnehmerelement (8, 8') in einer ihm zugeordneten Bewegungsrichtung beaufschlagbar ist.

12. Explosionsschutzventil nach Anspruch 11, **dadurch gekennzeichnet, dass** die Federanordnung zwei Federpaare (20, 20') aufweist, wobei für jede Bewegungsrichtung je ein Federpaar (20, 20') mit einem ersten Federelement (5, 5') und einem zweiten Federelement (6 bzw. 6') auf einer Seite der Führungsstange (3) angeordnet ist.

13. Explosionsschutzventil nach einem der Ansprüche 1 bis 12, **dadurch gekennzeichnet, dass** wenigstens das zweite Federelement (6, 6') mit Hilfe von Begrenzungsmitteln (9) in vorgespannter Stellung gehalten ist.

14. Explosionsschutzventil nach einem der Ansprüche 1 bis 13, **dadurch gekennzeichnet, dass** die Federelemente (5, 5', 6, 6') der Federanordnung als Druckfedern, insbesondere als Schraubendruckfedern ausgestaltet sind.

15. Explosionsschutzventil nach einem der Ansprüche 1 bis 14, **dadurch gekennzeichnet, dass** die Federsteifigkeit des ersten Federelements (5, 5')gleich, grösser oder kleiner als die Federsteifigkeit des zweiten Federelements (6, 6')ist.

## Claims

1. Explosion protection valve having a housing (2) and having at least one movable closing body (4) which is guided on a guide rod (3) inside the housing (2) and can be displaced from a predefined open position in at least one direction of movement into a sealing closed position in the event of a blast or suction wave, a spring arrangement which interacts with the closing body (4) being provided for holding the open position on the guide rod (3), **characterized in that** the spring arrangement has at least one first spring element (5, 5') and at least one second spring element (6, 6') with respect to a direction of movement, the two spring elements being arranged in such a way that, during a displacement of the closing body (4) into the closed position, the second spring element (6, 6') cannot be acted upon until after a predetermined spring travel (a) of the first spring element (5, 5').

2. Explosion protection valve according to Claim 1, **characterized in that** at least one first driver element (7, 7') and at least one second driver element (8, 8') are provided for acting upon the first and the second spring element (5 and 6 resp.), the closing body (4) being displaceably arranged on the guide rod (3) in such a way that only the first spring element (5) can be acted upon via the first driver element (7, 7') within the predetermined spring travel (a) and the second spring element (6) can be additionally acted upon via the second driver element (8) if the predetermined spring travel (a) is exceeded.

3. Explosion protection valve according to Claim 1 or 2, **characterized in that** the first driver element (7, 7') and the second driver element (8, 8') are arranged on the inside of a carrier tube (10), surrounding the guide rod (3), for the closing body (4).

4. Explosion protection valve according to one of Claims 1 to 3, having a closing body (4) displaceable in two directions of movement, **characterized in that**, to displace the closing body (4) in two directions of movement, a first driver element (7) and a second driver element (8) are provided, wherein, with respect to one of the directions of movement, a first spring element (5) assigned to this direction of movement can be acted upon via the first driver element (7) and a first spring element (5') assigned to the opposite direction and a second spring element (6) can be acted upon via the second driver element (8).

5. Explosion protection valve according to Claim 4, **characterized in that** the spring arrangement has a second spring element (6) which is in operative connection with the closing body (4) in each of the two directions of movement, wherein the second spring element (6) can be acted upon in one direction of movement via the first driver element (7) and in the opposite direction via the second driver element (8).

6. Explosion protection valve according to Claim 5, **characterized in that** a respective first spring element (5, 5') is arranged in the region of each side of the guide rod (3) and the second spring element (6) is arranged in between, approximately centrally in particular with respect to the guide rod (3).

7. Explosion protection valve according to Claim 5 or 6, **characterized in that** the second spring element (6) is held between two limiting means (9).

8. Explosion protection valve according to Claim 7, **characterized in that** the limiting means (9) for the second spring element (6) are mounted on the guide rod (3) in such a way as to be displaceable to a limited extent.

9. Explosion protection valve according to Claim 7 or 8, **characterized in that** the limiting means (9) each have a bush (11).

10. Explosion protection valve according to either of Claims 8 and 9, **characterized in that**, for the limited displacement of the limiting means (9), at least one guide groove (13) running in the direction of movement is arranged on the guide rod (3), and pins (12) connected to the respective bush (11) engage in each case in said guide groove (13).

11. Explosion protection valve according to one of Claims 1 to 3, **characterized in that**, to displace the closing body (4) in two directions of movement, two first driver elements (7, 7') having associated first spring elements (5, 5') and two second driver elements (8, 8') having associated second spring elements (6, 6') are provided, wherein the respective first spring element (5, 5') can be acted upon via its first driver element (7, 7') or the respective second spring element (6, 6') can be acted upon via its second driver element (8, 8') in a direction of movement assigned to it.

12. Explosion protection valve according to Claim 11, **characterized in that** the spring arrangement has two spring pairs (20, 20'), wherein one spring pair (20, 20') each having a first spring element (5, 5') and a second spring element (6 or 6' resp.) is arranged for each direction of movement on one side of the guide rod (3).

13. Explosion protection valve according to one of Claims 1 to 12, **characterized in that** at least the second spring element (6, 6') is held in a preloaded position by limiting means (9).

14. Explosion protection valve according to one of Claims 1 to 13, **characterized in that** the spring elements (5, 5', 6, 6') of the spring arrangement are designed as compression springs, in particular as helical compression springs.

15. Explosion protection valve according to one of Claims 1 to 14, **characterized in that** the spring stiffness of the first spring element (5, 5') is equal to, greater than or less than the spring stiffness of the second spring element (6, 6').

## Revendications

1. Soupape antidéflagrante avec une enceinte (2) et avec au moins un corps de fermeture mobile (4) guidé sur une tige de guidage (3) à l'intérieur de l'enceinte (2), lequel peut être déplacé d'une position ouverte prédéfinie à une position fermée étanche dans au moins une direction de déplacement sous une onde de pression ou d'aspiration, dans laquelle il est prévu un dispositif de ressort en liaison active avec le corps de fermeture (4) pour le maintien de la position ouverte sur la tige de guidage (3), **caractérisée en ce que** le dispositif de ressort présente, par rapport à une direction de déplacement, au moins un premier élément de ressort (5, 5') et au moins un deuxième élément de ressort (6, 6'), dans laquelle les deux éléments de ressort sont disposés de telle manière que, lors d'un déplacement du corps de fermeture (4) dans la position fermée, le deuxième élément de ressort (6, 6') ne puisse être actionné qu'après une course élastique prédéterminée (a) du premier élément de ressort (5, 5').

2. Soupape antidéflagrante selon la revendication 1, **caractérisée en ce qu'**il est prévu au moins un premier élément d'entraînement (7, 7') et au moins un deuxième élément d'entraînement (8, 8') pour solliciter le premier ou le deuxième élément de ressort (5 ou 6), dans laquelle le corps de fermeture (4) est disposé de façon déplaçable sur la tige de guidage (3) de telle manière que, à l'intérieur de la course élastique prédéterminée (a), seul le premier élément de ressort (5) puisse être sollicité par le premier élément d'entraînement (7, 7') et, en cas de dépassement de la course élastique prédéterminée (a), le deuxième élément de ressort (6) puisse être sollicité par le deuxième élément d'entraînement (8).

3. Soupape antidéflagrante selon la revendication 1 ou 2, **caractérisée en ce que** le premier élément d'entraînement (7, 7') et le deuxième élément d'entraînement (8, 8') sont disposés sur le côté intérieur d'un tube de support (10) pour le corps de fermeture (4) entourant la tige de guidage (3).

4. Soupape antidéflagrante selon l'une quelconque des revendications 1 à 3 avec un corps de fermeture (4) déplaçable dans deux directions de déplacement, **caractérisée en ce qu'**il est prévu un premier élément d'entraînement (7) et un deuxième élément d'entraînement (8) pour le déplacement du corps de fermeture (4) dans deux directions de déplacement, dans laquelle, par rapport à une des directions de déplacement, un premier élément de ressort (5) associé à cette direction de déplacement peut être sollicité par le premier élément d'entraînement (7) et un premier élément de ressort (5') associé à la direction contraire et un deuxième élément de ressort (6) peuvent être sollicités par le deuxième élément d'entraînement (8).

5. Soupape antidéflagrante selon la revendication 4, **caractérisée en ce que** le dispositif de ressort présente un deuxième élément de ressort (6), qui est en liaison active avec le corps de fermeture (4) dans chacune des deux directions de déplacement, dans laquelle le deuxième élément de ressort (6) peut être sollicité dans une direction de déplacement par le premier élément d'entraînement (7) et dans la direction contraire par le deuxième élément d'entraînement (8).

6. Soupape antidéflagrante selon la revendication 5, **caractérisée en ce qu'**un premier élément de ressort (5, 5') est disposé respectivement dans la région de chaque côté de la tige de guidage (3) et le deuxième élément de ressort (6) est disposé entre ceux-ci, en particulier sensiblement au milieu par rapport à la tige de guidage (3).

7. Soupape antidéflagrante selon la revendication 5 ou 6, **caractérisée en ce que** le deuxième élément de ressort (6) est maintenu entre deux moyens de limitation (9).

8. Soupape antidéflagrante selon la revendication 7, **caractérisée en ce que** les moyens de limitation (9) pour le deuxième élément de ressort (6) sont déplaçables de façon limitée sur la tige de guidage (3).

9. Soupape antidéflagrante selon la revendication 7 ou 8, **caractérisée en ce que** les moyens de limitation (9) présentent chaque fois une douille (11).

10. Soupape antidéflagrante selon l'une quelconque des revendications 8 ou 9, **caractérisée en ce qu'**au moins une rainure de guidage (13) s'étendant dans la direction de déplacement est disposée sur la tige de guidage (3) pour le déplacement limité des moyens de limitation (9), dans laquelle s'engagent chaque fois des broches (12) assemblées à la douille respective (11).

11. Soupape antidéflagrante selon l'une quelconque des revendications 1 à 3, **caractérisée en ce que**, pour le déplacement du corps de fermeture (4) dans deux directions de déplacement, il est prévu deux premiers éléments d'entraînement (7, 7') avec des premiers éléments de ressort correspondants (5, 5') et deux deuxièmes élément d'entraînement (8, 8') avec des deuxièmes éléments de ressort correspondants (6, 6'), dans laquelle le premier élément de ressort respectif (5, 5') ou le deuxième élément de ressort respectif (6, 6') peut être sollicité respectivement par son premier élément d'entraînement (7, 7') ou par son deuxième élément d'entraînement (8, 8') dans une direction de déplacement qui lui est associée.

12. Soupape antidéflagrante selon la revendication 11, **caractérisée en ce que** le dispositif de ressort comprend deux paires de ressorts (20, 20'), dans laquelle une paire de ressorts (20, 20') avec un premier élément de ressort (5, 5') et un deuxième élément de ressort (6 ou 6') est respectivement disposée sur un côté de la tige de guidage (3) pour chaque direction de déplacement.

13. Soupape antidéflagrante selon l'une quelconque des revendications 1 à 12, **caractérisée en ce qu'**au moins le deuxième élément de ressort (6, 6') est maintenu en position précontrainte à l'aide de moyens de limitation (9).

14. Soupape antidéflagrante selon l'une quelconque des revendications 1 à 13, **caractérisée en ce que** les éléments de ressort (5, 5', 6, 6') du dispositif de ressort se présentent sous la forme de ressort de compression, en particulier de ressorts de compression hélicoïdaux.

15. Soupape antidéflagrante selon l'une quelconque des revendications 1 à 14, **caractérisée en ce que** la raideur du premier élément de ressort (5, 5'), est égale, supérieure ou inférieure à la raideur du deuxième élément de ressort (6, 6').
